(19) **Europäisches Patentamt**
**European Patent Office**
**Office européen des brevets**

(11) **EP 1 165 244 B1**

(12) **EUROPÄISCHE PATENTSCHRIFT**

(45) Veröffentlichungstag und Bekanntmachung des Hinweises auf die Patenterteilung:
**19.05.2004 Patentblatt 2004/21**

(51) Int Cl.⁷: **B05B 9/04**, B05B 12/08, B67D 5/02, B67D 1/12, G05D 16/20

(21) Anmeldenummer: **00910814.3**

(22) Anmeldetag: **11.03.2000**

(86) Internationale Anmeldenummer:
**PCT/EP2000/002155**

(87) Internationale Veröffentlichungsnummer:
**WO 2000/058018 (05.10.2000 Gazette 2000/40)**

(54) **VERFAHREN UND VORRICHTUNG ZUM BEREITSTELLEN EINES FLUIDS AUS EINEM DRUCKTANK**

METHOD AND DEVICE FOR DISPENSING A FLUID FROM A PRESSURE TANK

PROCEDE ET DISPOSITIF DE DISTRIBUTION D'UN FLUIDE A PARTIR D'UN RESERVOIR A FLUIDE SOUS PRESSION

(84) Benannte Vertragsstaaten:
**AT BE CH CY DE DK ES FI FR GB GR IE IT LI LU MC NL PT SE**

(30) Priorität: **29.03.1999 DE 19914203**
**09.08.1999 DE 19937606**

(43) Veröffentlichungstag der Anmeldung:
**02.01.2002 Patentblatt 2002/01**

(73) Patentinhaber: **Steag HamaTech AG**
**75447 Sternenfels (DE)**

(72) Erfinder: **LIEDTKE, Björn**
**D-75038 Oberderingen (DE)**

(74) Vertreter: **Geyer, Ulrich F., Dr. Dipl.-Phys.**
**WAGNER & GEYER,**
**Patentanwälte,**
**Gewürzmühlstrasse 5**
**80538 München (DE)**

(56) Entgegenhaltungen:
**WO-A-97/14505          US-A- 2 751 114**
**US-A- 4 313 475        US-A- 4 413 752**
**US-A- 4 450 981        US-A- 5 730 323**

**Beschreibung**

Die vorliegende Erfindung bezieht sich auf ein Verfahren zum Bereitstellen eines Fluids aus einem Drucktank, bei dem das Einleiten eines unter Druck stehenden Gases in den Drucktank über ein Proportionalventil, das in einer Einlaßleitung des Drucktanks angeordnet ist, das Messen des Drucks des in einer Auslaßleitung befindlichen Fluids mit einem ersten Drucksensor und das Öffnen und Schließen eines Auslaßventils in der Auslaßleitung vorgesehen ist. Die Erfindung bezieht sich ferner auf eine Vorrichtung zum Bereitstellen eines Fluids aus einem Drucktank mit einem Proportialventil, das in einer Einlaßleitung des Drucktanks zum Einleiten eines unter Druck stehenden Gases angeordnet ist, einem ersten Drucksensor in einer Auslaßleitung des Drucktanks zum Messen des Drucks des in der Auslaßleitung befindlichen Fluids und einem Auslaßventil in der Auslaßleitung.

Derartige Verfahren und Vorrichtungen sind beispielsweise in Belackungssystemen bei der Herstellung von CDs bekannt. Bei diesen Systemen ist es für eine gleichmäßige und kontinuierliche Belackung der CDs wichtig, daß der Druck des bereitzustellenden Lacks am Auslaßventil möglichst einen konstanten, vorbestimmten Wert besitzt. Bei dem bekannten System wird der am ersten Drucksensor gemessene Druckwert als ein Ist-Wert für eine Regelung des Proportionalventils verwendet. Dabei ergibt sich jedoch das Problem, daß der am ersten Sensor gemessene Druck durch dynamische Leitungs- und Filterdruckverluste abfällt, sobald das Auslaßventil geöffnet wird. Aufgrund dieses Druckabfalls wird der Druck am Proportionalventil solange nachgeregelt, bis der Ist-Wert wieder mit einem vorgegebenen Soll-Wert übereinstimmt. Dabei wird auch während eines Auslaßvorgangs nachgeregelt, was zu Ungenauigkeiten hinsichtlich der abgegebenen Lackmenge führt. Nach dem Schließen des Auslaßventils kommen die dynamischen Leitungs- und Filterdruckverluste nicht mehr zur Wirkung, und der gemessene Drück am ersten Drucksensor steigt wieder auf einen höheren Wert. Das Proportionalventil muß erneut nachregeln, indem das zuvor eingeleitete Gas, welches in der Regel Stickstoff ist, abgelassen wird, bis der Ist-Wert wieder dem Soll-Wert entspricht.

Diese Regelvorgänge führen zu Schwankungen des Dosiervolumens sowie einem hohen Stickstoffverbrauch. Des weiteren kann es zu Konzentrationsänderungen und ggf. einer Kristallisation des im Lösungsmittel gelösten Lacks infolge einer Lösungsmittelverdampfung und einem Auslassen der Lösungsmitteldämpfe mit dem beim Nachregeln entweichenden Stickstoff kommen. Ferner treten Dauerschwingungen des Reglers bei einem Tankfüllstand mit kritischem Resonanz-Gasvolumen auf, was zu einem höheren Stickstoffverbrauch führt.

Der vorliegenden Erfindung liegt daher die Aufgabe zugrunde, ein Verfahren und eine Vorrichtung zum Bereitstellen eines Fluids aus einem Drucktank vorzusehen, bei dem bzw. bei der auf einfache und kostengünstige Weise eine gleichmäßige und kontinuierliche Bereitstellung des Fluids gewährleistet wird.

Die gestellte Aufgabe wird erfindungsgemäß bei einem Verfahren der eingangs genannten Art dadurch gelöst, daß ein Druck-Sollwert in Abhängigkeit vom Meßergebnis des ersten Drucksensors bestimmt und an das Proportionalventil übertragen wird, und der Gasdruck in der Einlaßleitung mit einem zwischen dem Proportionalventil und dem Drucktank liegenden zweiten Drucksensor gemessen und an das Proportionalventil übertragen wird. Durch das Messen des Gasdrucks in der Einlaßleitung und die Übertragung der Meßergebnisse an das Proportionalventil wird die oben beschriebenen häufige Nachregelung durch das Proportionalventil beim Öffnen und Schließen des Auslaßventils vermieden, da zwischen Proportionalventil und zweitem Drucksensor keine dynamischen Leitungs- und Filterdruckverluste auftreten. Dies führt zu einem geringeren Stickstoffverbrauch, da kein Ablassen von Stickstoff beim Schließen des Auslaßventils erfolgt, wodurch auch eine geringere Änderung der Farbstoffkonzentration im Lösungsmittel erreicht wird. Darüber hinaus werden Dauerschwingungen beim Regeln unterdrückt, da der durch Proportionalventil und zweitem Drucksensor gebildete Regelkreis nicht schwingungsfähig ist. Durch die Bestimmung eines Druck-Sollwerts in Abhängigkeit vom Meßergebnis des ersten Drucksensors und Übertragen desselben an das Proportionalventil erfolgt eine automatische Anpassung des Systems an veränderliche Störgrößen, wie beispielsweise Tankfüllstand und Filterdruckverluste, wodurch ein stabiles Regelverhalten ohne Schwingungen und einer hohen Dosiergenauigkeit erreicht wird.

Gemäß einer bevorzugten Ausführungsform der Erfindung werden für die Bestimmung des Druck-Sollwerts ausschließlich solche Meßergebnisse des ersten Drucksensors verwendet, die bei geöffnetem Auslaßventil gemessen wurden, um zu verhindern, daß Druckänderungen, die auftreten, wenn das Auslaßventil geöffnet oder geschlossen wird, die Sollwertbestimmung beeinflussen. Für einen konstanten Dosiervolumenstrom ist nur der Druck am externen Sensor bei geöffnetem Ventil relevant und von Interesse. Dabei werden ausschließlich solche Meßergebnisse des ersten Drucksensors verwendet, die nach einer bestimmten Zeitperiode nach dem Öffnen des Auslaßventils gemessen wurden, um beim Öffnen auftretende Schwingungen nicht in die Bestimmung einfließen zu lassen. Um eine gleichmäßige Bereitstellung des Fluids zu erreichen, wird für die Bestimmung des Druck-Sollwerts ein über ein Meßinterval gemitteltes Meßergebnis des ersten Drucksensors verwendet.

Vorzugsweise wird der Druck-Sollwert neben der Abhängigkeit vom Meßergebnis des ersten Drucksensors in Abhängigkeit vom Meßergebnis des zweiten Drucksensors bestimmt, um eine bessere Gleichmäßigkeit und Unter-drückung von Störgrößen zu erreichen. Vorzugsweise wird eine Druckdifferenz zwischen Einlaß- und Auslaßleitung gemessen, wobei der Druck-Sollwert bei einer Ausführungsform der Erfindung in Abhängigkeit von der gemessenen Druckdifferenz bestimmt wird.

Bei einer besonders bevorzugten Ausführungsform der Erfindung wird die Bestimmung und/oder Übertragung des Druck-Sollwerts nur bei geschlossenem Auslaßventil durchgeführt, um sicherzustellen, daß während eines Auslaßvorgangs keine Veränderung des vorgegebenen Druck-Sollwerts und eine ggf. damit verbundene Nachregelung erfolgt.

Gemäß einer weiteren Ausführungsform der Erfindung wird die Füllstandshöhe des Drucktanks in Abhängigkeit von den Meßergebnissen der ersten und zweiten Drucksensoren bestimmt, um eine automatische Anzeige derselben vorzusehen und die daraus resultierende Störgröße bei der Druck-Sollwertbestimmung ausregeln zu können.

Vorzugsweise wird für eine automatische Anzeige eines Filterzustands, der Zustand eines in der Auslaßleitung befindlichen Filters in Abhängigkeit von den Meßergebnissen des ersten Drucksensors bestimmt. Aus der automatischen Anzeige kann ermittelt werden, wann ein Filterwechsel erforderlich ist. Dabei wird der Filterzustand vorzugsweise in Abhängigkeit von einer Differenz der Meßergebnisse des ersten Drucksensors bei geschlossenem und geöffnetem Auslaßventil bestimmt. Bei der Bestimmung des Filterzustands werden vorzugsweise ausschließlich solche Meßergebnisse verwendet, die nach Ablauf einer vorbestimmten Zeitperiode nach dem Schließen bzw. nach dem Öffnen des Auslaßventils gemessen wurden, um beim Schließen bzw. Öffnen entstehende Schwingungen nicht in die Bestimmung einfließen zu lassen.

Die der Erfindung zugrundeliegende Aufgabe wird bei einer Vorrichtung der eingangs genannten Art dadurch gelöst, daß eine Steuereinheit zum Bestimmen eines dem Proportionalventil bereitzustellenden Druck-Sollwerts in Abhängigkeit vom Meßergebnis des ersten Drucksensors und ein zwischen dem Proportionalventil und dem Drucktank liegender zweiter Drucksensor zum Messen des Gasdrucks in der Einlaßleitung und zum Übertragen des Meßergebnisses an das Proportionalventil vorgesehen sind. Durch die Vorrichtung werden die oben unter Bezugnahme auf das Verfahren beschriebenen Vorteile erreicht. Für eine besonders einfache und kostengünstige Ausführungsform der Erfindung ist der zweite Drucksensor vorzugsweise in dem Proportionalventil integriert.

Gemäß einer weiteren vorteilhaften Ausführungsform der Erfindung ist ein Differenzdrucksensor vorgesehen, der zwischen der Einlaß- und der Auslaßleitung angeordnet ist.

Die Erfindung wird nachfolgend anhand eines bevorzugten Ausführungsbeispiels unter Bezugnahme auf die Zeichnungen erläutert; in den Zeichnungen zeigt:

Fig. 1    eine erfindungsgemäße Vorrichtung zum Bereitstellen eines Fluids;
Fig. 2    ein Fließdiagramm, welches die automatische Bestimmung eines Druck-Sollwerts darstellt;
Fig. 3    ein Fließdiagramm, welches die Bestimmung eines Filterzustands und eines Volumenstroms darstellt; und
Fig. 4    eine graphische Darstellung von Tot- und Meßzeiten von Drucksensoren.

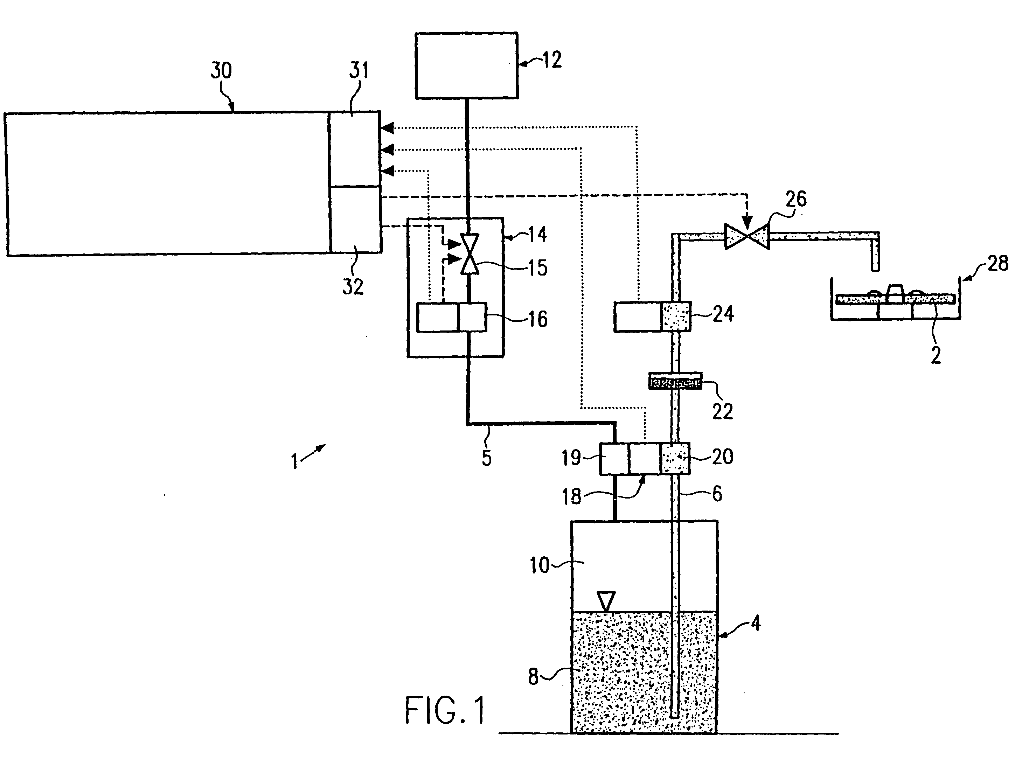

Figur 1 zeigt ein Belackungssystem 1 für CDs 2.

Das Belackungssystem 1 weist einen Drucktank 4 mit einer Einlaßleitung 5 und einer Auslaßleitung 6 auf. Die Einlaßleitung 5 ist an einer Oberseite des Drucktanks mit diesem verbunden und steht mit einem oberen Bereich des Drucktanks 4 in Verbindung. Die Auslaßleitung 6 ist ebenfalls mit einer Oberseite des Drucktanks 4 verbunden. Die Auslaßleitung 6 erstreckt sich jedoch durch das Innere des Drucktanks 4 und steht in einem unteren Bereich mit dem Inneren des Drucktanks in Verbindung. Der Drucktank 4 ist teilweise mit einem Lack 8 für die Belackung der CDs 2 gefüllt. Aufgrund des Gewichts des Lacks 8 füllt dieser einen unteren Bereich des Drucktanks 4 aus. In dem über dem Lack befindlichen Bereich befindet sich ein unter Druck stehendes Gas 10, wie beispielsweise Stickstoff.

Der Stickstoff 10 wird von einer Stickstoffversorgung 12, die mit der Einlaßleitung 5 in Verbindung steht, in den Drucktank 4 eingefüllt. In der Einlaßleitung 5 befindet sich zwischen der Stickstoffversorgung 12 und dem Drucktank 4 eine Ventileinheit 14 mit einem Proportionalventil 15 und einem internen Drucksensor 16, der zwischen dem Proportionalventil 15 und dem Drucktank 4 angeordnet ist.

Benachbart zu der Oberseite des Drucktanks 4 ist ein Differentialdrucksensor 18 mit einem ersten Sensorelement 19, das in der Einlaßleitung 5 angeordnet ist, und einem zweiten Sensorelement 20, das in der Auslaßleitung 6 angeordnet ist, vorgesehen. Oberhalb des Sensorelements 20 sind in der Auslaßleitung 6 ferner ein Filter 22, ein Drucksensor 24 sowie ein Auslaßventil 26 angeordnet. Hinter dem Ventil 26 (vom Drucktank 4 aus gesehen) öffnet sich die Auslaßleitung 6 zu einer Belackungsstation 28, in der CDs 2 bei geöffnetem Ventil 26 mit dem Lack 8 beaufschlagt werden.

Die Ventileinheit 14, der Differenzdrucksensor 18, der Drucksensor 24 sowie das Ventil 26 stehen jeweils mit einer Steuereinheit 30 in Verbindung. Die Steuereinheit 30 weist einen Eingangsteil 31 auf, der die Meßergebnisse des internen Drucksensors 16 des Differentialdrucksensors 18 und des Drucksensors 24 empfängt. Ein Ausgangsteil 32 der Steuereinheit 30 steht mit dem Ventil 26 in Verbindung, um das Öffnen und Schließen des Ventils 26 zu steuern. Der Ausgangsteil 32 steht ferner mit dem Proportionalventil 15 der Ventileinheit 14 in Verbindung, um dem Proportionalventil 15 einen von der Steuereinheit 30 berechneten Druck-Sollwert vorzugeben. Ein Ausgang des internen Drucksensors 16 steht auch mit dem Proportionalventil 15 in Verbindung, um dem Proportionalventil 15 in der Einlaßleitung 5 einen Druck-Istwert anzugeben. Das Proportionalventil 15 der Ventileinheit 14 ist in der Lage, aufgrund des vorgegebenen Druck-Sollwerts von der Steuereinheit 30 sowie dem Druck-Istwert von dem internen Drucksensor 16 den in der Einlaßleitung 5 befindlichen Druck auf den Druck-Sollwert zu regeln. Innerhalb der Ventileinheit 14 wird somit ein Regelkreis gebildet, in den von außen durch die Steuereinheit 30 ein Druck-Sollwert eingespeist wird.

Beim Betrieb des Belackungssystems 12 wird der Drucktank 4 durch Einleiten des unter Druck stehenden Stickstoffs auf ein vorgegebenes Druckniveau gebracht. Durch den in den Drucktank anstehenden Druck wird der in dem Drucktank befindliche Lack 8 in der Auslaßleitung 6 nach oben in Richtung des Ventils 26 gedrückt. Bei geschlossenem Ventil 26 ist das System im wesentlichen statisch, und es findet keine Lackströmung statt. Wenn sich eine CD 2 in der Belackungsstation 28 in einer Belackungsposition befindet, wird das Ventil 26, gesteuert von der Steuereinheit 30, für eine bestimmte Zeitperiode, die für das Aufbringen einer Lackschicht auf dem Substrat 2 erforderlich ist, geöffnet. Bei geöffnetem Ventil 26 strömt aufgrund des in dem Drucktank 4 herrschenden Drucks Lack 8 durch die Auslaßleitung 6 zu der Belackungsstation 28. Nach dem Schließen des Ventils 26 entsteht wieder ein statisches System, in dem kein Lack fließt.

Um zu erreichen, daß bei aufeinanderfolgenden Belackungsschritten eine gleichbleibende Lackmenge auf die Substrate 2 aufgebracht wird, muß der Druck in dem System, insbesondere im Bereich des Auslasses 26, bei geöffnetem Auslaßventil 26 auf einem konstanten Wert gehalten werden. Dies wird dadurch erreicht, daß der Druck in der Auslaßleitung 6, insbesondere in einem Bereich hinter dem Filter 22 (vom Drucktank 4 aus gesehen), auf einem konstanten Niveau gehalten wird. Hierfür wird der Ventileinheit 14 ein Druck-Sollwert für die Regelung des Drucks in dem System vorgegeben, der mit dem durch den Drucksensor 24 gemessenen Druck in Beziehung steht.

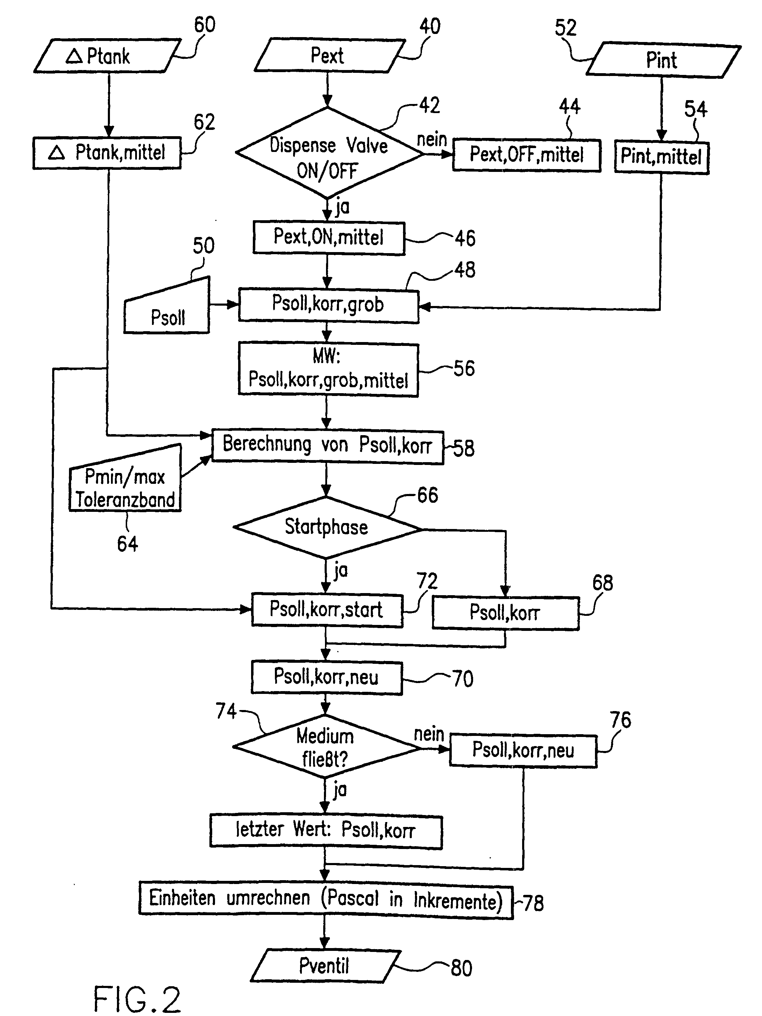

Die Berechnung des Druck-Sollwerts wird nachstehend anhand des Fließdiagramms gemäß Figur 2 erklärt.

In einem ersten Block 40 wird am ersten Drucksensor 24 der Druck $P_{ext}$ gemessen. Dieser Meßwert wird an einen Entscheidungsblock 42 weitergeleitet, der feststellt, ob die Meßwerte aus einem Zeitraum stammen, in dem das Auslaßventil 26 geöffnet oder geschlossen ist.

Wenn die Meßergebnisse aus einem Zeitraum stammen, in dem das Auslaßventil 26 geschlossen ist, dann werden die Meßergebnisse an einen Block 44 weitergeleitet, der aus den Meßergebnissen einen gemittelten Druckwert $P_{ext,AUS,mittel}$ berechnet.

Wenn die Meßergebnisse aus einem Zeitraum stammen, in dem das Ventil 26 geöffnet ist, werden die Meßergebnisse zu einem Block 46 weitergeleitet, der einen gemittelten Druckwert $P_{ext,AN,mittel}$ berechnet.

Nach der Berechnung des gemittelten Druckwertes $P_{ext,AN,mittel}$ wird dieser Wert an einen Block 48 weitergeleitet. Im Block 50 wird in Abhängigkeit vom gewünschten Volumenstrom des Lacks an der Belackungsstation ein gewünschter Druckwert $P_{soll}$ vorgegeben. Dieser Druckwert $P_{soll}$ wird an den Block 48 weitergeleitet.

In einem Block 52 wird ein Druck $P_{int}$ am Drucksensor 16 der Ventileinheit 14 gemessen. Die Meßergebnisse werden an einen Block 54 weitergeleitet, in dem daraus ein gemittelter Druckwert $P_{int,mittel}$ berechnet wird. Dieser gemittelte Druckwert wird an den Block 48 weitergeleitet.

Im Block 48 wird ein grob angepaßter bzw. korrigierter Druck-Sollwert $P_{soll,korr,grob}$ berechnet, und zwar in Abhängigkeit der in dem Block 48 eingespeisten Druckwerte. Der grob angepaßte Druck-Sollwert ergibt sich aus folgender Gleichung:

$$P_{soll,korr,grob} = P_{soll} + (P_{int,mittel} - P_{ext,mittel})$$

Dieser Wert wird an einen Block 56 weitergeleitet, in dem ein Mittelwert $P_{soll,korr,grob,mittel}$ berechnet wird, der wiederum an einen Block 58 weitergeleitet wird.

In einem Block 60 wird die Druckdifferenz $\Delta P_{tank}$ zwischen der Einlaßleitung und der Auslaßleitung gemessen und an einen Block 62 weitergeleitet, wo die Meßergebnisse gemittelt werden. Die gemessene Druckdifferenz $\Delta P_{tank}$ steht mit der Füllhöhe des Lacks 8 in dem Druckbehälter 4 in Beziehung, die daraus berechnet wird. Der gemittelte Differenzdruck $\Delta P_{tank,mittel}$ wird an den Block 58 übertragen.

In einem Block 64 wird eine Toleranzbreite $\Delta P_{toleranz}$ für aufeinanderfolgende Messungen festgelegt und an den Block 58 übertragen.

Im Block 58 wird bestimmt, ob der im Block 56 zuletzt ermittelte, grob angepaßte, gemittelte Druck-Sollwert $P_{soll,korr,grob,mittel}$ im Vergleich zu einem zuvor ermittelten Wert innerhalb der Toleranzbreite liegt. Dies wird wie folgt ermittelt:

$$((P_{soll,korr,grob,mittel,j+1} - P_{soll,korr,grob,mittel,j})^2)^{0,5} > \Delta P_{toleranz},$$

wobei j+1 den zuletzt berechneten Mittelwert bezeichnet und j den zuvor berechneten Mittelwert bezeichnet.

Wenn die obige Ungleichung erfüllt ist, dann gilt

$$P_{soll,korr,j+1} = P_{soll,korr,grob,mittel,j+1},$$

d. h. der neue angepaßte Druck-Sollwert entspricht dem im Block 56 ermittelten Mittelwert.

Wenn die obige Ungleichung nicht erfüllt ist, dann wird der neue angepaßte Druck-Sollwert anhand der folgenden Gleichung ermittelt:

$$P_{soll,korr,j+1} = P_{soll,korr,j} + (\Delta P_{tank,mittel,j+1} - \Delta P_{tank,mittel,j}).$$

Die Regelung anhand der Meßergebnisse des Differenzdrucksensors 18 erfolgt aufgrund einer höheren Meßgenauigkeit des Differenzdrucksensors 18 gegenüber dem Drucksensor 24, wodurch die Häufigkeit von "groben" Nachregelvorgängen und insbesondere die Amplitude der Nachregelungsänderungen reduziert wird. Dadurch wird ein geringer Stickstoffverbrauch erreicht.

Der sich bei der Bestimmung im Block 58 ergebende neue, angepaßte Druck-Sollwert $P_{soll,korr}$ wird anschließend an den Block 66 weitergeleitet. Im Block 66 wird festgestellt, ob sich das Belackungssystem innerhalb einer Startphase, d. h. beispielsweise innerhalb der ersten fünf Belackungszyklen, befindet. Wenn sich das System nicht innerhalb einer Startphase befindet, dann wird der im Block 58 ermittelte Druck-Sollwert über den Block 68 zu einem Block 70 geleitet, um dort den neuen, angepaßten Druck-Sollwert $P_{soll,korr,neu}$ zu bilden.

Wenn sich das System jedoch innerhalb einer Startphase befindet; wird in einem Block 72 ein angepaßter Start-Druck-Sollwert $P_{soll,korr,start}$ unter anderem anhand der Eigenschaften des Lacks, den geometrischen Verhältnissen des Systems, der Druckdifferenz am Differenzdrucksensor und dem Volumenstrom des Lacks ermittelt.

$V_{start}$ läßt sich aufgrund der Geometrischen Verhältnisse, den Druckverhältnissen in der Auslaßleitung, sowie den Eigenschaften des Lacks ermitteln, wobei aufgrund fehlender Meßergebnisse davon auszugehen ist, daß der Druck am Drucksensor $P_{ext} = P_{soll}$ ist. Die Filterkonstante $K_{filter,start}$ entspricht, wenn der Filter neu ist der Herstellerangabe. Wenn der Filter gebraucht ist, entspricht sie dem zuletzt ermittelten und gespeicherten Wert. Alternativ ist es auch möglich die Filterkonstante dadurch zu ermitteln, daß vor der tatsächlichen Belackung einer CD eine Testabgabezyklus durchgeführt wird, in dem dann die Filterkonstante ermittelt wird.

Diese Startwertbestimmung ist erforderlich, da beim Anfahren des Systems $P_{ext,AN}$ nicht bekannt ist. Die Sollwertkorrektur ergibt einen grob angenäherten Startwert.

Anschließend wird der angepaßte Start-Druck-Sollwert an den Block 70 weitergeleitet, wo er den neuen, angepaßten Drucksollwert $P_{soll,korr,neu}$ bildet.

Dieser Wert wird an den Block 74 weitergeleitet, in dem festgestellt wird, ob sich das System derzeitig in einem statischen oder dynamischen Zustand befindet. Wenn sich das System in einem statischen Zustand befindet, d. h. wenn kein Medium fließt, dann wird der neue, angepaßte Druck-Sollwert $P_{soll,korr,neu}$ über einen Block 76 an einen Block 78 übertragen. Falls im Block 74 festgestellt ist, daß das System in einem dynamischen Zustand ist, d. h. ein Medium fließt, dann wird der neue, angepaßte Druck-Sollwert $P_{soll,korr,neu}$ nicht an den Block 78 weitergeleitet, sondern der im Block 78 befindliche vorhergehende Wert beibehalten.

Im Block 78 wird der angepaßte Druck-Sollwert $P_{soll,korr,neu}$ in für das Proportionalventil 15 verwertbare Einheiten umgewandelt und zur Vorgabe eines Druck-Sollwerts an das Ventil als $P_{ventil}$ im Block 80 übertragen.

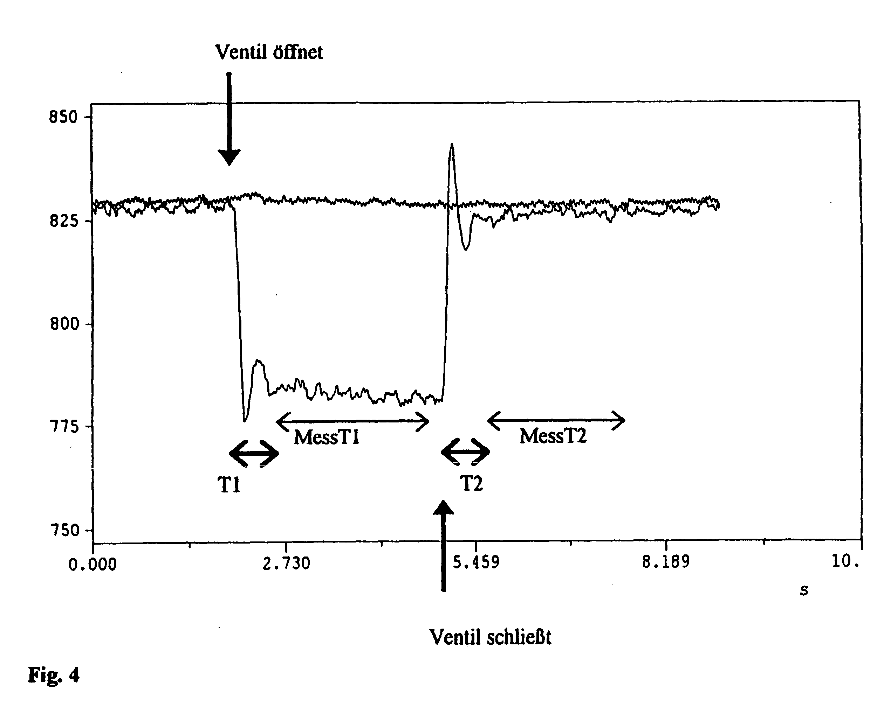

Anhand des Fließdiagramms gemäß Fig. 4 wird nachfolgend die Bestimmung des Filterzustands erläutert.

Um den Filterzustand zu bestimmen, muß der Druck $P_{ext}$ auch bei geschlossenem Auslaßventil 26 ausgewertet werden. Die Differenz zwischen dem am Drucksensor 24 gemessenen Druck $P_{ext,auf}$ bei geöffnetem Auslaßventil und $P_{ext,zu}$ bei geschlossenem Auslaßventil 26 resultiert aus dem Filterdruckverlust und dem Leitungsdruckverlust im Schlauch gemäß folgender Beziehung:

$$P_{ext,zu} - P_{ext,auf} = \Delta P_{filter} + \Delta P_{schlauch},$$

wobei bei konstantem Tankdruck und Volumenstrom der Druckverlust im Schlauch auch konstant ist. Der Filterdruckverlust kann sich aber über einen längeren Zeitraum auch bei konstantem Tankdruck vergrößern, wenn sich der Filter zusetzt. Infolgedessen muß der angepaßte Druck-Sollwert $P_{soll,korr,neu}$ in gleichem Maße vergrößert werden.

Wird dabei ein Schwellenwert erreicht, so erscheint eine Alarmmeldung, die anzeigt, daß der Filter verbraucht ist und ausgewechselt werden muß.

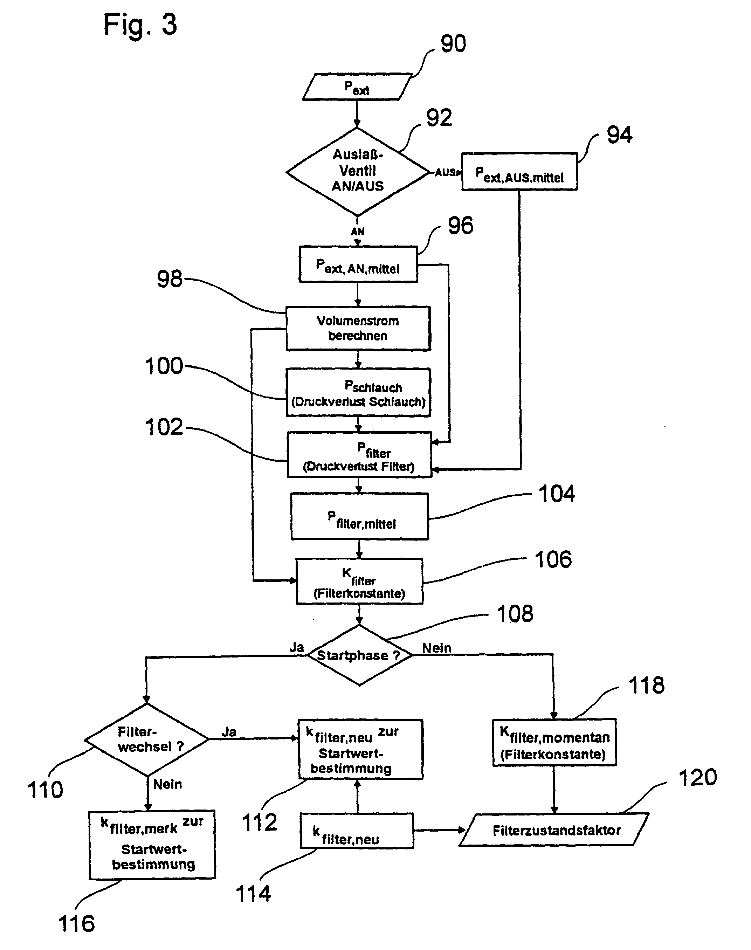

Darüber hinaus soll der Filterzustand während des Betriebs angezeigt werden. Die Berechnung des Filterzustands wird anhand des Fließdiagramms gemäß Figur 3 beschrieben.

In einem Block 90 wird der Druck $P_{ext}$ in der Auslaßleitung 6 am Drucksensor 24 gemessen. Die gemessenen Druckwerte werden an einen Block 92 weitergeleitet, in dem festgestellt wird, ob das Auslaßventil 26 geöffnet oder geschlossen ist. Wenn das Auslaßventil 26 geschlossen ist, werden die gemessenen Druckwerte $P_{ext}$ an einen Block 94 übertragen, der einen Mittelwert der gemessenen Druckwerte bei geschlossenem Ventil 26 $P_{ext,AUS,mittel}$ berechnet.

Wenn im Block 92 festgestellt wird, daß das Auslaßventil 26 geöffnet ist, dann werden die gemessenen Druck-werte $P_{ext}$ zu einem Block 96 weitergeleitet, der einen Mittelwert $P_{ext,AN,mittel}$ aus den bei geöffnetem Ventil gemessenen Druckwerten $P_{ext}$ berechnet.

Anschließend wird in einem Block 98 der Volumenstrom des Lacks und im Block 100 der Druckverlust in der Auslaßleitung $\Delta P_{schlauch}$ ermittelt. Der Mittelwert $P_{ext,AUS,mittel}$, der Mittelwert $P_{ext,AN,mittel}$ sowie der Druckverlust in der Leitung $\Delta P_{schlauch}$ werden an einem Block 102 übertragen, in dem ein Druckverlust im Filter $\Delta P_{filter}$ berechnet wird. Der Druckverlust im Filter wird anhand der folgenden Gleichung ermittelt:

$$\Delta P_{filter} = \Delta P_{ext,aus,mittel} - \Delta P_{ext,an,mittel} - \Delta P_{schlauch}.$$

Anschließend wird in einem Block 104 ein Mittelwert $\Delta P_{filter,mittel}$ des Druckverlusts am Filter berechnet.

Anschließend wird in einem Block 106 eine Filterkonstante $K_{filter}$ anhand des ermittelten Filter-Druckverlusts und des Volumenstroms berechnet. Dies erfolgt anhand folgender Gleichung:

$$K_{filter} = \Delta P_{filter,mittel} \cdot A_{filter} / (v \cdot \eta_{medium})$$

Dieser Wert wird an einen Block 108 übertragen, in dem festgestellt wird, ob sich das System in einer Startphase befindet.

Wenn sich das System in einer Startphase befindet, wird in einem weiteren Entscheidungsblock 110 festgestellt, ob zuvor ein Filterwechsel erfolgt ist oder nicht. Wenn ein Filterwechsel vor dem Neustart erfolgte, wird in einem Block 112 für die obige Berechnung des Start-Druck-Sollwertes $P_{soll,korr,start}$ die Filterkonstante $K_{filter,start}$ gleich der Filterkonstanten eines neuen Filters $K_{filter, neu}$ gesetzt. Dieser Wert $K_{filter,neu}$ wird aus den Herstellerangaben im Block 114 bestimmt und an den Block 112 übertragen.

Wenn im Block 110 festgestellt wurde, daß kein Filterwechsel vor dem Neustart erfolgte, wird in einem Block 116 für die Startwertbestimmung die Filterkonstante $K_{filter,start}$ gleich dem zuletzt ermittelten und vor dem herunterfahren des Systems gespeicherten Wert $K_{filter,merk}$ gesetzt.

Wenn im Block 108 festgestellt wurde, daß sich das System nicht in einer Startphase befindet, wird die im Block 106 berechnete Filterkonstante $K_{filter}$ über einen Block 118 als momentaner Filterzustandsfaktor $K_{filter,momentan}$ zum Block 120 weitergeleitet. Im Block 120 wird der Filterzustandsfaktor durch folgende Gleichung berechnet:

$$\text{Filterzustandsfaktor} = K_{filter,momentan}/K_{filter,neu}$$

Durch den Filterzustandsfaktor wird angegeben, um wieviel der momentane Filterdruckverlust höher ist als der ursprüngliche. Auf diese Weise kann besser abgeschätzt werden, wie lange der alte Filter noch verwendet werden kann, bevor ein Filterwechsel notwendig ist.

Figur 4 zeigt die am internen Drucksensor 16 und am Drucksensor 24 gemessenen Drücke über einen Öffnungszyklus des Ventils 26 hinweg. Die obere Kurve zeigt die am internen Durcksensor 16 gemessenen Drücke, während die untere, sich relativ stark verändernden Kurve die am Drucksensor 24 gemessenen Drücke zeigt.

Wie in Figur 4 zu erkennen ist, sind die am internen Drucksensor 16 gemessenen Drücke unabhängig davon, ob das Auslaßventil 26 geschlossen oder geöffnet ist, relativ konstant.

Die am Drucksensor 24 gemessenen Drücke ändern sich jedoch relativ stark beim Öffnen bzw. beim Schließen des Auslaßventils 26. Dabei entsteht direkt nach dem Schließen ein relativ starker Druckabfall, der anschließend wieder ansteigt, um dann wieder abzufallen. Dabei kommt es in einem Zeitintervall T1 nach dem Öffnen des Auslaßventils 26 zu relativ starken Schwingungen des Drucks. Nach dem Zeitintervall T1 schließt sich eine Phase mit relativ konstantem Druck an. Nach dem Schließen des Auslaßventils 26 kommt es zu einem relativ starken Druckanstieg, der anschließend wieder abfällt und ansteigt. Dabei kommt es in einem Zeitintervall T2 nach dem Schließen des Ventils zu relativ starken Schwingungen. Nach dem Zeitintervall T2 schließt sich wiederum eine Phase mit einem relativ konstanten Druck an.

Für die obige Berechnung eines korrigierten Druck-Sollwerts sowie für die Berechnung des Filterzustandsfaktors werden daher ausschließlich Meßergebnisse verwendet, die aus einer Phase stammen, in der die durch das Öffnen und Schließen des Ventils entstehenden Druckschwingungen im wesentlichen abgeklungen sind. Diese Phasen sind in Figur 4 als MeßT1 für Messungen bei geöffnetem Ventil und MeßT2 für Messungen bei geschlossenem Ventil angezeigt.

Obwohl die Vorrichtung anhand eines bevorzugten Ausführungsbeispiels unter Bezugnahme auf ein Belakkungssystem für CDs beschrieben wurde, ist die Vorrichtung nicht darauf beschränkt.

**Patentansprüche**

1.  Verfahren zum Bereitstellen eines Fluids (8) aus einem Drucktank (4), das folgende Verfahrensschritte aufweist:

    -   Einleiten eines unter Druck stehenden Gases (10) in den Drucktank (4) über ein Proportionalventil (15), das in einer Einlaßleitung (5) des Drucktanks (4) angeordnet ist,
    -   Messen des Drucks des in einer Auslaßleitung (6) befindlichen Fluids (8) mit einem ersten Drucksensor (24), und
    -   Öffnen und Schließen eines Auslaßventils (26) in der Auslaßleitung (6),

    *gekennzeichnet durch*

    -   Bestimmen eines Druck-Sollwerts in Abhängigkeit vom Meßergebnis des ersten Drucksensors (24), und Übertragen desselben an das Proportionalventil (15), und
    -   Messen des Gasdrucks in der Einlaßleitung (5) mit einem zwischen dem Proportionalventil (15) und dem Drucktank (4) liegenden zweiten Drucksensor (16), und Übertragen des Meßergebnisses an das Proportionalventil (15).

2.  Verfahren nach Anspruch 1, **dadurch gekennzeichnet, daß** für die Bestimmung des Druck-Sollwerts ausschließlich solche Meßergebnisse des ersten Drucksensors (24) verwendet werden, die bei geöffnetem Auslaßventil (26) gemessen wurden.

3.  Verfahren nach Anspruch 2, **dadurch gekennzeichnet, daß** ausschließlich solche Meßergebnisse des ersten Drucksensors (24) verwendet werden, die nach einer bestimmten Zeitperiode nach dem Öffnen des Auslaßventils (26) gemessen wurden.

4.  Verfahren nach einem der vorhergehenden Ansprüche, **dadurch gekennzeichnet, daß** für die Bestimmung des Druck-Sollwerts ein über ein Meßintervall gemitteltes Meßergebnis des ersten Drucksensors (24) verwendet wird.

5.  Verfahren nach einem der vorhergehenden Ansprüche, **dadurch gekennzeichnet, daß** der Druck-Sollwert in Abhängigkeit vom Meßergebnis des zweiten Drucksensors (16) bestimmt wird.

6.  Verfahren nach einem der vorhergehenden Ansprüche, **dadurch gekennzeichnet, daß** einer Druckdifferenz zwischen Einlaß- und Auslaßleitung (5;6) gemessen wird.

7.  Verfahren nach Anspruch 6, **dadurch gekennzeichnet, daß** der Druck-Sollwert in Abhängigkeit von der Druckdifferenz bestimmt wird.

8.  Verfahren nach einem der vorhergehenden Ansprüche, **dadurch gekennzeichnet, daß** die Füllstandshöhe des Drucktanks (4) in Abhängigkeit von den Meßergebnissen eines Differenzdrucksensors (18) bestimmt wird.

9.  Verfahren nach einem der vorhergehenden Ansprüche, **dadurch gekennzeichnet, daß** die Bestimmung und/oder Übertragung des Druck-Sollwerts nur bei geschlossenem Auslaßventil (26) erfolgt.

10. Verfahren nach einem der vorhergehenden Ansprüche, **dadurch gekennzeichnet, daß** die Füllstandshöhe des Drucktanks (4) in Abhängigkeit von den Meßergebnissen der ersten und zweiten Drucksensoren (24;16) bestimmt wird.

11. Verfahren nach einem der vorhergehenden Ansprüche, **dadurch gekennzeichnet, daß** der Zustand eines in der Auslaßleitung (6) befindlicher Filters (18) in Abhängigkeit von den Meßergebnissen des ersten Drucksensors (24) bestimmt wird.

12. Verfahren nach Anspruch 10, **dadurch gekennzeichnet, daß** der Filterzustand in Abhängigkeit von einer Differenz der Meßergebnisse bei geschlossenem und geöffnetem Auslaßventil (26) bestimmt wird.

**13.** Verfahren nach Anspruch 11, **dadurch gekennzeichnet, daß** bei der Bestimmung des Filterzustands ausschließlich solche Meßergebnisse verwendet werden, die nach Ablauf einer vorbestimmten Zeitperiode nach dem Schließen bzw. nach dem Öffnen des Auslaßventils (26) gemessen wurden.

**14.** Vorrichtung (1) zum Bereitstellen eines Fluids (8) aus einem Drucktank (4), mit

- einem Proportionalventil (15), das in einer Einlaßleitung (5) des Drucktanks (4) zum Einleiten eines unter Druck stehenden Gases (10) angeordnet ist,
- einem ersten Drucksensor (24) in einer Auslaßleitung (6) des Drucktanks (4), zum Messen des Drucks des in der Auslaßleitung (6) befindlichen Fluids (8), und
- einem Auslaßventil (26) in der Auslaßleitung (6),

*gekennzeichnet durch*

- eine Steuereinheit (30) zum Bestimmen eines dem Proportionalventil (15) bereitzustellenden Druck-Sollwerts in Abhängigkeit vom Meßergebnis des ersten Drucksensors (24), und
- einen zwischen dem Proportionalventil (15) und dem Drucktank (4) liegenden zweiten Drucksensor (16) zum Messen des Gasdrucks in der Einlaßleitung (5) und zum Übertragen des Meßergebnisses an das Proportionalventil (15).

**15.** Vorrichtung nach Anspruch 1, **dadurch gekennzeichnet, daß** der zweite Drucksensor (16) in dem Proportionalventil integriert ist.

**16.** Vorrichtung nach einem der vorhergehenden Ansprüche, **gekennzeichnet durch** einen Differenzdrucksensor (18), der zwischen der Einlaß- und der Auslaßleitung (5;6) angeordnet ist.

**Claims**

**1.** Method of providing a fluid (8) from a pressure tank (4), the method comprising the following method steps:

- introducing a gas (10) standing under pressure into the pressure tank (4) by way of a proportioning valve (15), which is arranged in an inlet duct (5) of the pressure tank (4),
- measuring the pressure of the fluid (8), which is disposed in an outlet duct (6), by a first pressure sensor (24) and
- opening and closing an outlet valve (26) in the outlet duct (6),

**characterised by**

- determining a target pressure value in dependence on the measurement result of the first pressure sensor (24) and transmitting the same to the proportioning valve (15) and
- measuring the gas pressure in the inlet duct (5) by a second sensor (16) lying between the proportioning valve (15) and the pressure tank (4) and transmitting the measurement result to the proportioning valve (15).

**2.** Method according to claim 1, **characterised in that** for determination of the target pressure value there are used exclusively such measurement results of the first pressure sensor (24) as were measured with the outlet valve (26) open.

**3.** Method according to claim 2, **characterised in that** there are used exclusively such measurement results of the first pressure sensor (24) as were measured after a defined time period after opening of the outlet valve (26).

**4.** Method according to one of the preceding claims, **characterised in that** a measurement result, which is averaged over a measuring interval, of the first pressure sensor (24) is used for determination of the target pressure value.

**5.** Method according to one of the preceding claims, **characterised in that** the target pressure value is determined in dependence on the measurement result of the second pressure sensor (16).

**6.** Method according to one of the preceding claims, **characterised in that** a pressure difference between inlet and outlet duct (5; 6) is measured.

EP 1 165 244 B1

7. Method according to claim 6, **characterised in that** the target pressure value is determined in dependence on the pressure difference.

8. Method according to one of the preceding claims, **characterised in that** the filling state level of the pressure tank (4) is determined in dependence on the measurement results of a differential pressure sensor (18).

9. Method according to one of the preceding claims, **characterised in that** the determination and/or transmission of the target pressure value takes place only when the outlet valve (26) is closed.

10. Method according to one of the preceding claims, **characterised in that** the filling state level of the pressure tank (4) is determined in dependence on the measurement results of the first and second pressure sensors (24; 16).

11. Method according to one of the preceding claims, **characterised in that** the state of a filter (18) disposed in the outlet duct (6) is determined in dependence on the measurement results of the first pressure sensor (24).

12. Method according to claim 10, **characterised in that** the filter state is determined in dependence on a difference of the measurement results when the outlet valve (26) is closed and open.

13. Method according to claim 11, **characterised in that** in the determination of the filter state there are used exclusively such measurement results as were measured after expiry of a predetermined time period after the closing or after the opening of the outlet valve (26).

14. Device (1) for providing a fluid (8) from a pressure tank (4), comprising

  - a proportioning valve (15) which is arranged in an inlet duct (5) of the pressure tank (4) for introducing a gas (10) standing under pressure,
  - a first pressure sensor (24) in an outlet duct (6) of the pressure tank (4) for measuring the pressure of the fluid (8) disposed in the outlet duct (6) and
  - an outlet valve (26) in the outlet duct (6),

  **characterised by**

  - a control unit (30) for determining a target pressure value, which is to be provided to the proportioning valve (15), in dependence on the measurement result of the first pressure sensor (24) and
  - a second pressure sensor (16), which lies between the proportioning valve (15) and the pressure tank (4), for measuring the gas pressure in the inlet duct (5) and for transmitting the measurement result to the proportioning valve (15).

15. Device according to claim 1, **characterised in that** the second pressure sensor (16) is integrated in the proportioning valve.

16. Device according to one of the preceding claims, **characterised by** a differential pressure sensor (18) arranged between the inlet and the outlet duct (5; 6).

**Revendications**

1. Procédé de mise à disposition d'un fluide (8) d'une cuve sous pression (4), qui présente les étapes de procédé suivantes :

  - introduction d'un gaz (10) sous pression dans la cuve sous pression (4) par une vanne proportionnelle (15) qui est disposée dans un conduit d'admission (5) de la cuve sous pression (4),
  - mesure de la pression du fluide (8) se trouvant dans un conduit d'évacuation (6) avec un premier capteur de pression (24), et
  - ouverture et fermeture d'une vanne de sortie (26) dans le conduit d'évacuation (6),

  **caractérisé par**

- la détermination d'une valeur de consigne de pression en fonction du résultat de mesure du premier capteur de pression (24), et la transmission de celle-ci à la vanne proportionnelle (15), et
- la mesure de la pression du gaz dans le conduit d'admission (5) avec un deuxième capteur de pression (16) situé entre la vanne proportionnelle (15) et la cuve sous pression (4), et la transmission du résultat de mesure à la vanne proportionnelle (15).

2. Procédé selon la revendication 1, **caractérisé en ce que** pour la détermination de la valeur de consigne de pression, exclusivement des résultats de mesure du premier capteur de pression (24) sont utilisés, qui ont été mesurés à l'état ouvert de la vanne d'évacuation (26).

3. Procédé selon la revendication 2, **caractérisé en ce qu'**exclusivement des résultats de mesure du premier capteur de pression (24) sont utilisés qui ont été mesurés après une période de temps déterminée après l'ouverture de la vanne d'évacuation (26).

4. Procédé selon l'une des revendications précédentes, **caractérisé en ce que** pour la détermination de la valeur de consigne de pression, un résultat de mesure du premier capteur de pression (24) moyenné sur un intervalle de mesure est utilisé.

5. Procédé selon l'une des revendications précédentes, **caractérisé en ce que** la valeur de consigne de pression est déterminée en fonction du résultat de mesure du second capteur de pression (16).

6. Procédé selon l'une des revendications précédentes, **caractérisé en ce qu'**une différence de pression entre les conduits d'admission et d'évacuation (5 ; 6) est mesurée.

7. Procédé selon la revendication 6, **caractérisé en ce que** la valeur de consigne de pression est déterminée en fonction de la différence de pression.

8. Procédé selon l'une des revendications précédentes, **caractérisé en ce que** la hauteur de remplissage de la cuve sous pression (4) est déterminée en fonction des résultats de mesure d'un capteur (18) de la pression différentielle.

9. Procédé selon l'une des revendications précédentes, **caractérisé en ce que** la détermination et/ou la transmission de la valeur de consigne de pression a lieu seulement lorsque la vanne d'évacuation (26) est fermée.

10. Procédé selon l'une des revendications précédentes, **caractérisé en ce que** la hauteur de remplissage de la cuve sous pression (4) est déterminée en fonction des résultats de mesure des premier et second capteurs de pression (24 ; 16).

11. Procédé selon l'une des revendications précédentes, **caractérisé en ce que** l'état d'un filtre (18) se trouvant dans le conduit d'évacuation (6) est déterminé en fonction des résultats de mesure du premier capteur de pression (24).

12. Procédé selon la revendication 10, **caractérisé en ce que** l'état du filtre est déterminé en fonction d'une différence des résultats de mesure, à l'état fermé et à l'état ouvert de la vanne d'évacuation (26).

13. Procédé selon la revendication 11, **caractérisé en ce que** lors de la détermination de l'état du filtre, exclusivement des résultats de mesure sont utilisés qui ont été mesurés après l'écoulement d'une période de temps prédéterminée après la fermeture, respectivement après l'ouverture de la vanne d'évacuation (26).

14. Dispositif (1) pour la mise à disposition d'un fluide (8) d'une cuve sous pression (4), avec

- une vanne proportionnelle (15) qui est disposée dans un conduit d'admission (5) de la cuve sous pression (4) pour introduire un gaz (10) sous pression,
- un premier capteur de pression (24) dans un conduit d'évacuation (6) de la cuve sous pression (4) pour mesurer la pression du fluide (8) se trouvant dans le conduit d'évacuation (6), et
- une vanne d'évacuation (26) dans le conduit d'évacuation (6),

**caractérisé par**

- une unité de commande (30) pour déterminer une valeur de consigne de pression à mettre à disposition de la vanne proportionnelle (15) en fonction du résultat de mesure du premier capteur de pression (24), et

- un second capteur de pression (16) se trouvant entre la vanne proportionnelle (15) et la cuve sous pression (4) pour mesurer la pression du gaz dans le conduit d'admission (5) et pour transmettre le résultat de mesure à la vanne proportionnelle (15).

15. Dispositif selon la revendication 1, **caractérisé en ce que** le second capteur de pression (16) est intégré dans la vanne proportionnelle.

16. Dispositif selon l'une des revendications précédentes, **caractérisé par** un capteur de pression différentielle (18) qui est disposé entre les conduits d'admission et d'évacuation (5 ; 6).

FIG. 1

FIG.2

## Fig. 3

$P_{ext}$ — 90

Auslaß-Ventil AN/AUS — 92

$P_{ext,AUS,mittel}$ — 94 (AUS)

$P_{ext,AN,mittel}$ — 96 (AN)

Volumenstrom berechnen — 98

$P_{schlauch}$ (Druckverlust Schlauch) — 100

$P_{filter}$ (Druckverlust Filter) — 102

$P_{filter,mittel}$ — 104

$K_{filter}$ (Filterkonstante) — 106

Startphase ? — 108 (Ja / Nein)

Filter-wechsel ? — 110 (Ja / Nein)

$k_{filter,neu}$ zur Startwert-bestimmung — 112

$K_{filter,momentan}$ (Filterkonstante) — 118

$k_{filter,merk}$ zur Startwert-bestimmung — 116

$k_{filter,neu}$ — 114

Filterzustandsfaktor — 120

Fig. 4

EP 1 165 244 B1